Europäisches Patentamt

(19) European Patent Office

Office européen des brevets

(11) Publication number: **0 020 558**
**B1**

# EUROPEAN PATENT SPECIFICATION

(12)

(45) Date of publication of patent specification: **23.02.83**

(21) Application number: **79901473.3**

(22) Date of filing: **22.10.79**

(86) International application number:
**PCT/SE79/00213**

(87) International publication number:
**WO 80/00777 01.05.80 Gazette 80/10**

(51) Int. Cl³: **A 01 G 25/16,**
**F 16 K 31/383,**
**G 05 B 13/00**

(54) Method and device for automatic irrigation.

(30) Priority: **23.10.78 SE 7811004**

(43) Date of publication of application:
**07.01.81 Bulletin 81/1**

(45) Publication of the grant of the European patent:
**23.02.83 Bulletin 83/8**

(84) Designated Contracting States:
**AT CH DE FR GB NL**

(56) References cited:
**SE - B - 353 210**
**SE - C - 30 203**
**SE - C - 116 795**

(73) Proprietor: **SKAPPEL, Einar**
**Kvartärvägen 12**
**S-595 00 Mjölby (SE)**

(72) Inventor: **SKAPPEL, Einar**
**Kvartärvägen 12**
**S-595 00 Mjölby (SE)**

(74) Representative: **Verdier, Louis**
**Cabinet BERT, de KERAVENANT ET**
**HERRBURGER 115 Boulevard Haussmann**
**F-75008 Paris (FR)**

## Method and device for automatic irrigation

From the Swedish Patent specification 353.210 it is known to provide irrigation apparatus connected to a water pipe with an automatic regulating device by means of which irrigation is permitted for periods of adjustable duration broken by waterless periods with a duration dependent on the relative humidity of the surrounding air.

The known device comprises a main valve with a valve body formed as a differential piston, having a small-bore central through duct to its major side, a duct from this major side to a control valve which is arranged to close and open the main valve when it closes and opens said duct, as well as a pivoting means with an open bowl, arranged to be supplied with water from a drop means controlled by the control valve and, as soon as the supplied amount of water has reached a limiting value, to tip over and thereby actuate the control valve by a projecting portion such that it closes the main valve and the water flow to the drop means, keeping them closed until sufficient water has evaporated from the bowl to cause the tipping means tips back again, the projecting portion disengaging the control valve so that the latter reopens the main valve and the water flow to the drop means.

It has been found desirable to arrange that irrigation takes place substantially at night, and that the duration of the waterless periods shall be dependent on rainfall.

The present invention relates to a method fulfilling precisely these desires, and an apparatus for carrying out the method.

The invention has been given the form and characterizing features disclosed in the accompanying patent claims.

The invention is clarified by the appended drawings on which:

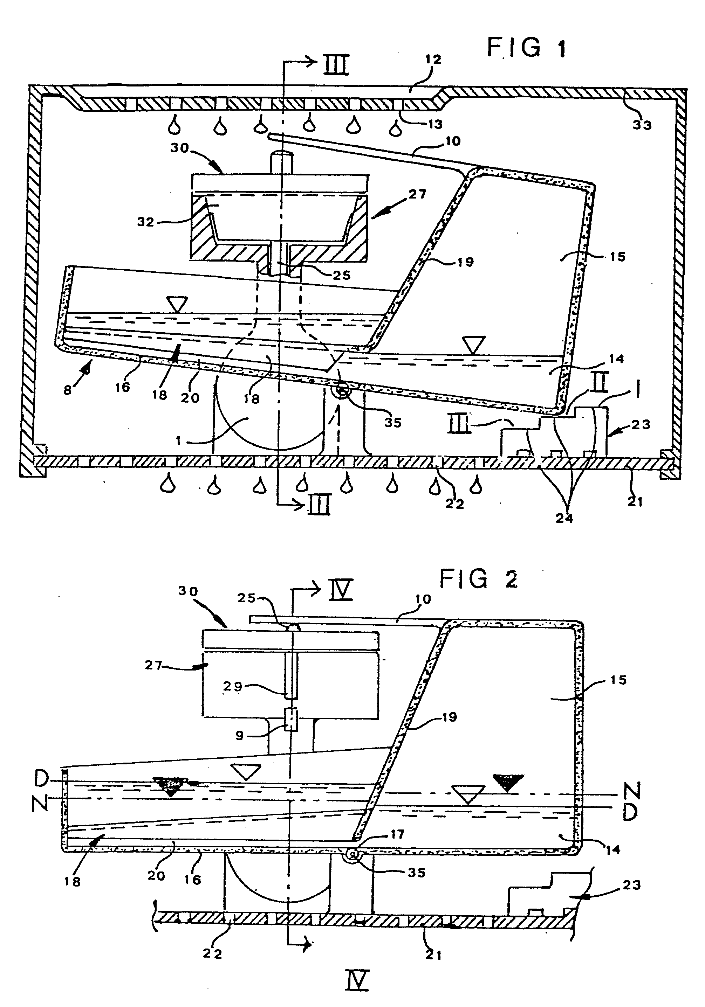

Figure 1 is a longitudinal section through an embodiment of a device in accordance with the invention, in a position for irrigation.

Figure 2 illustrates a detail on the embodiment shown in Figure 1 in a closing position.

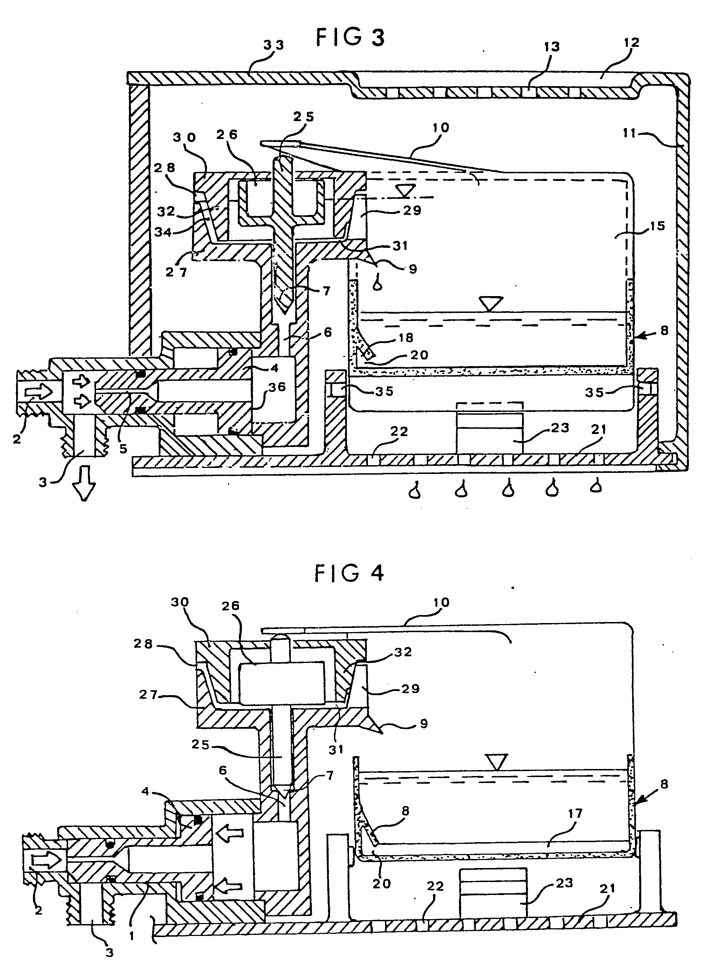

Figure 3 is a section along the line III—III in Figure 1 and

Figure 4 is a section along the line IV—IV in Figure 2.

A casing 11 enclosing the device is put together from two parts which slide into each other with a substantially flat bottom 21 having perforations 22 and a roof 33 provided with a rainwater collecting depression 12, the substantially flat bottom of which is provided with perforations 13.

The bottom 21 carries a main valve 1, with an inlet 2 projecting out of the casing 11 and arranged for connection to a water pipe, as well as an outlet 3 arranged for connection to irrigation apparatus, (not shown). The main valve 1 comprises a valve body 4 formed as a differential piston with a narrowgauge central bore 5 to its major side, from which a duct 6 goes substantially vertically to a control valve 7 with a vertical spindle 25 carrying a float 26 fastened thereto. The float is surrounded by an upwardly open circular bowl 27 with an overflow 28 and a side opening 29. The wall 34 of the bowl 27 increases in internal diameter upwardly. A cover 30 with a central opening for the spindle 25 is provided with a dependent rim 32 fitting rotatably in the bowl 27 and with a narrow groove 31 opposite the side opening 29 of the bowl 27. The width of the groove 31 substantially corresponds to the side opening 29. Together, they constitute a through passage to a drop means 9 formed with a nose or spout, and the area of said through passage can be regulated by turning the lid or cover 30 in the bowl 27.

In the casing there is a pivoting means, consisting of two bowls 8, 14 with a common flat bottom 16, one on either side of a shaft 35, on which the bowls 8, 14 are pivoted. Of these bowls, the one 8, is upwardly open and situated under the casing depression 12 and under the drop means 9. The other bowl 14 carries a closed air chamber 15, one wall 19 of which depends into the bowls 8, 14 but terminates short of the common flat bottom 16 to define a slit 17. From the roof of the air chamber 15 there extends a projection 10 formed as an arm extending over the spindle 25. The air chamber 15 is connected to the open bowl 8 by means of said narrow transverse slit 17 adjacent the common bottom 16, and by means of at least one duct 18 going to the opposite end of the open bowl 8 with a narrow lengthwise slit 20 adjacent the bottom 16. The cross section of the duct 18 is optional, all that is important is that its roof height rises continously from being negligibly larger than the width of the slit 20 at the furthermost end of the open bowl 8 to a maximum at its opening into the air chamber 15, the height of the opening being determined by the quantity of water desired to be retained in the air chamber 15 and the air volume of the latter. The opening height must be somewhat larger than the sum of the width of the slits 17, 20 and the maximum difference in the day and night levels of the water in the air chamber 15.

On the bottom 21 of the casing 11 there is arranged a staircase-shaped block 23 under the air chamber end such that any one of the steps of the block 23 can be selected to serve as pivot-limiting means for the bowls 8, 14.

The apparatus functions in the following way:

Starting from the situation where the open bowl 8 is full of water and has caused the pivoting means to tip in this direction. The projecting portion of arm 10 engages against the spindle 25 so that the latter presses the control valve 7 sealingly against its seating. In this mode, the pressure against the major side 36 of the differential piston 4 will be equal to the pressure in the water pipe and cause the main valve 1 to close the flow to the irrigation installation. The water in the float bowl 27 will then flow down from the drop means 9 into the open bowl 8, so that the float chamber 27 will empty and the weight of the float 26 coacts with the arm 10 to keep the control valve 7 in a closing position.

If a period of fine weather now occurs, the water in the open bowl 8 will evaporate and pass through the perforations 13. The pressure of the arm 10 against the spindle 25 is thus reduced, while the water enclosed in the air chamber 15 will remain substantially unaltered. For a given water level in the open bowl 8, the water pressure propagated via the through bore 5 in the differential piston 4, and the duct 6 to the control valve 7, will press against the control valve 7 so that it opens somewhat and lets water into the float bowl 27. The float 26 presses the spindle 25 upwards towards the arm 10 so that this causes the tilting means to tip the bowls 8, 14 over towards the air chamber side. Since the float bowl 27 is now filled to the overflow 28, water will pass out through the groove 31 and side opening 29 to the drop means 9, from which it drops down onto the open bowl 8 at a rate which can be adjusted by turning the lid or cover 30. When the weight of water in the open bowl 8 has risen to a given value, it causes the tipping means to tip back again to the starting position and via the arm 10 presses the control valve 7 and thus the main valve 1 to a closing position. The water in the float bowl 27 drops down into the open bowl so that the float 26 will coact with the arm 10 to keep the valves 1 and 7 in a closing position, whereafter the sequence described above starts once again.

The air in the airchamber 15 naturally alters its temperature in accordance with that of the surroundings and thereby also its volume. This results in that a portion of the water in the bottom basin of the air chamber 15 will be pressed out into the open bowl 8 via the transverse slit 17 during the day and sucked back again during the night. This results in that the tipping means will be in a valve opening position during irrigation times, i.e. tipped towards the open bowl 8 side during the night and in a closing position during the day. Irrigation thus always takes place at night, which is just what is best for plant growth.

If the slit 17 were the only connection between the air chamber 15 and the open bowl 8 there would be difficulties in obtaining as much water in the air chamber 15 as required to obtain sharp and distinct motion from closing (daytime) to opening (nighttime) position. These difficulties are overcome by means of the duct 18 which enables water to be taken into the air chamber 15 such that its surface coincides with the top of the duct opening when the tipping means is tipped maximally over towards the air chamber side.

To adjust the maximum tipping of the tipping means towards the air chamber side, which determines the duration of the irrigation periods, the block 23 is so displaceable that it steps 24 form stops limiting the tipping angle.

## Claims

1. A method of automatically regulating irrigation apparatus connected to a water pipe comprising the steps that a main valve (1) with a valve body (4) formed as a differential piston is controlled by a control valve (7) such that the movement of the main valve between open and closed positions is controlled by the water pressure in the pipe while the control valve (7) in its turn is controlled by a tipping means (8, 14) which in one tipped position causes the control valve (7) to assume a position closing the main valve (1) and in its second tipped position releases the control valve (7) so that the latter can assume a position opening the main valve (1), the tipped position of the tipping means (8, 14) being determined by the water level in an open bowl (8) comprising one side of said tipping means, said bowl being supplied with water via the control valve (7), at an adjustable rate from a drop forming means (9) as long as the control valve (7) is in an open position, and such that the drops are interrupted when the tipping means (8, 14) is caused to tip in one direction by the increased water level in the open bowl (8) and to thereby close the control valve (7) and thereafter to lose water from the open bowl (8) by evaporation until the reduced water level causes the tipping means (8, 14) to tip back again to its original position and so open the control valve (7), characterised in that a volume of air, the pressure of which varies in dependance upon the differences between day and night temperatures, is enclosed in an air chamber (15) on a further bowl (14) of the tipping means (8, 14) said pressure being capable of causing water in the further bowl (14) to be pressed out of said further bowl (14) via a slit (17) defined by a space between one wall (19) of the air chamber and the bottom (16) of the bowls (8, 14) into the open bowl (8) during the day and to be sucked back via said slit (17) into the further bowl (14) during the night.

2. Apparatus for carrying out the method of claim 1, comprising a main valve (1) with an inlet (2), and an outlet (3) and a valve body (4) therein formed as a differential piston, the differential piston having a central through bore (5) from a minor to a major side thereof, a duct (6) extending from said major side to a control valve (7) which is disposed such that when it closes and opens the duct (6) it causes closing and opening of the main valve (1), a tipping means comprising an open bowl (8) disposed such that it is supplied with water from a drop means (9) controlled by the control valve (7), the arrangement being such that as soon as the amount of water supplied to the bowl (8) has reached a predetermined value the open bowl (8) tips and thereby causes a projection (10) to act on the control valve (7) such that it closes the main valve (1) and thus closes the water supply to the drop means (9), the projection (10) then keeping the control valve (7) closed until sufficient water has evaporated from the open bowl (8) to permit it to tip back again, whereby the projection (10) releases the control valve (7) so that the latter opens and thus reopens the main valve (1), and permits water to flow once again to the drop means (9), characterised in that the bowl (8) control valve (7) and main valve (1) are enclosed in a casing (11) with a perforated bottom (21), said casing (11) being provided above the open bowl (8) with a depression (12) having perforations (13), and in that the tipping means includes a further bowl (14) integral with a closed air chamber (15) and having in common with said open bowl (8) a flat bottom (16), the further bowl (14) being connected with said open bowl (8) by means of a slit (17) defined as a space between one wall (19) of the air chamber (15) and said flat bottom (16), the slit (17) being covered by the water level in the further bowl (14) to close the air space in the air chamber (15).

3. Apparatus as claimed in claim 2, characterised in that the air chamber (15) is also connected to the open bowl (8) by at least one duct (18) extending from an opening in the wall (19) of the air chamber (15), facing towards the open bowl (8) and to the opposite end of said open bowl, and that said duct (18) is provided with a slit (20) adjacent the bottom of said bowl and along its whole length.

4. Apparatus as claimed in claim 2 or 3, characterised in that a stepped block (23) is arranged for displacement below the air chamber (15) such that any one of its steps (24) can be selected to serve as pivot limiting means for the tipping means.

5. Apparatus as claimed in claim 2, characterised in that the control valve (7) has a spindle (25) directed straight upwards, about which a float (26) is attached, the projection (10) being arranged, when engaged against the upper end of said spindle (25) to hold the control valve (7) closed, as long as the open bowl (8) is filled with water.

6. Apparatus as claimed in claim 5, characterised in that the float (26) is surrounded by a float bowl (27) which is circular, with its open end upwards and increasing in internal diameter upwards, with a side opening (29) above the drop means (9) and an overflow (28), said bowl (27) being covered by a lid (30) with a central opening for the spindle (25) and a dependent rim (32) fitting into the float bowl (27), and defining there with a narrow groove (31) directly facing the side opening (29), said groove (31) being substantially just as wide as the side opening (29) and that the float (26) is dimensioned so that when the bowl (27) is filled with water to the overflow (28) it gives the spindle (25) its maximum upwardly directed force.

**Patentansprüche**

1. Verfahren zur Regelung einer automatischen Berieselungseinrichtung, die mit einer Wasserleitung verbunden ist und ein mit einem als Differentialkolben ausgebildeten Ventilkörper (4) versehenes Hauptventil (1) aufweist, das von einem Steuerventil (7) derart gesteuert wird, daß die Bewegung des Hauptventils (1) zwischen seiner offenen und seiner geschlossenen Stellung durch den in der Wasserleitung herrschenden Wasserdruck gesteuert wird, während das Steuerventil (7) mittels einer Kippvorrichtung (8, 14) gesteuert wird, die in einer ersten Kippstellung das Steuerventil (7) in eine die Schließung des Hauptventils (1) verursachende Lage bewegt und in einer zweiten Kippstellung das Steuerventil (7) freigibt, so daß das Steuerventil (7) eine die Öffnung des Hauptventils (1) ermöglichende Lage annehmen kann, wobei die jeweilige Kippstellung der Kippvorrichtung (8, 14) von dem in einen eine Seite der Kippvorrichtung (8, 14) bildenden offenen Behälter (8) befindlichen Wasserpegel bestimmt wird und der Behälter (8, 14) über das Steuerventil (7) mit einer einstellbaren Wassermenge aus einer Tropfenbildungsvorrichtung (9) versorgt wird, solange sich das Steuerventil (7) in der geöffneten Stellung befindet und wobei die Abgabe der Wassertropfen unterbrochen wird, wobei die Kippvorrichtung (8, 14) infolge des in dem offenen Behälter (8) ansteigenden Wasserpegels in eine Richtung gekippt und dabei das Steuerventil (7) geschlossen wird, das geöffnet wird, wenn durch Verdunstung aus dem offenen Behälter (8) Wasser entweicht bis der reduzierte Wasserpegel die Kippvorrichtung (8, 14) wieder in ihre ursprüngliche Lage zurückkippt, dadurch gekennzeichnet, daß in einer auf einen weiteren Behälter (14) der Kippvorrichtung (8, 14) befindlichen Luftkammer (15) eine bestimmte Luftmenge eingeschlossen ist, deren Luftdruck sich in Abhängigkeit von den Unterschieden zwischen den Tages- und Nachttemperaturen ändert und das in dem weiteren Behälter (14) befindliche Wasser am Tage aus dem weiteren Behälter (14) über einen durch einen Hohlraum zwischen einer Wand (19) der Luftkammer (15) und dem Boden des Behälters (14) gebildeten Schlitz (17) in den offenen Behälter (8) ausdrückt und es in der Nacht über den Schlitz (17) in den weiteren Behälter (14) zurücksaugt.

2. Vorrichtung zur Durchführung des Verfahrens nach Anspruch 1 mit einem Hauptventil (1), das einen Einlaß (2) und einen Auslaß (3) sowie einen darin als Differentialkolben ausgebildeten Ventilkörper (4) enthält, wobei der Differentialkolben eine von einer (kleineren) Nebenseite zu einer Hauptseite führende zentrale Durchgangsbohrung (5) aufweist, mit einem sich von der Hauptseite zu einem Steuerventil (7) erstreckenden Kanal (6), wobei das Steuerventil (7) so angeordnet ist, daß es beim Öffnen und Schließen über den Kanal (6) das Hauptventil (1) öffnet und schließt, mit einer Kippvorrichtung, die einen offenen Behälter (8) enthält, der so angeordnet ist, daß er gesteuert von dem Steuerventil (7) von einer Tropfvorrichtung (9) mit Wasser versorgt wird, wobei die Vorrichtung so eingestellt ist, daß bei Erreichen eines vorbestimmten Wertes der in den offenen Behälter (8) eingeführten Wassermenge der offene Behälter (8) kippt und dabei ein mit dem offenen Behälter (8) verbundener Vorsprung auf das Steuerventil (7) einwirkt, das das Hauptventil (1) schließt und damit die Wasserzufuhr zu der Tropfvorrichtung (9) unterbindet, woraufhin der Vorsprung (10) das Steuerventil (7) geschlossen hält bis eine ausreichende Wassermenge aus dem offenen Behälter (8) verdunstet ist, so daß diese erneut kippt, wobei der Vorsprung (10) das Steuerventil (7) freigibt und letzteres und damit auch das Hauptventil (1) öffnet, dadurch gekennzeichnet, daß der Behälter (8), das Steuerventil (7) und das Hauptventil (1) in einem Gehäuse (11) mit perforiertem Boden (21) enthalten sind, wobei das Gehäuse (11) oberhalb des offenen Behälters (8) mit einer eine Perforation (13) aufweisenden Vertiefung (12) versehen ist und daß die Kippvorrichtung einen weiteren, als integralen Bestandteil der geschlossenen Kammer (15) ausgebildeten Behälter (14) aufweist, der gemeinsam mit dem offenen Behälter einen flachen Boden (16) enthält, wobei der weitere Behälter (14) über einen als Hohlraum zwischen einer Wand (19) der Luftkammer (15) und dem flachen Boden (16) ausgebildeten Schlitz (17) mit dem offenen Behälter (8) verbunden ist, wobei der Schlitz (17) von dem in dem weiteren Behälter befindlichen Wasserpegel bedeckt ist, so daß der Luftraum in der Luftkammer (15) geschlossen ist.

3. Vorrichtung nach Anspruch 2, dadurch gekennzeichnet, daß die Luftkammer (15) zusätzlich mit dem offenen Behälter (8) über einen sich von einer Öffnung in der Wand (19) der Luftkammer (15) in Richtung des offenen Behälters (8) und zu dem gegenüberliegenden Ende des offenen Behälters erstreckenden Kanal verbunden ist und daß der Kanal (18) mit einem neben dem Boden des Behälters (8) und über seine gesamte Länge vorgesehenen Schlitz (20) versehen ist.

4. Vorrichtung nach Anspruch 2 oder 3, dadurch gekennzeichnet, daß ein stufenförmiger Block (23) unterhalb der Luftkammer (15) verstellbar angeordnet ist, derart, daß jeweils eine der Stufen (24) des Blocks (23) als Kippbegrenzungsvorrichtung für die Kippvorrichtung auswählbar ist.

5. Vorrichtung nach Anspruch 2, dadurch gekennzeichnet, daß das Steuerventil (7) eine unmittelbar nach oben gerichtete Spindel (25) aufweist, an der ein Schwimmkörper (26) angebracht ist, wobei der Vorsprung (10) so angeordnet ist, daß, wenn er gegen das obere Ende der Spindel (25) stößt das Steuerventil (7) solange geschlossen hält wie der offene Behälter (8) mit Wasser gefüllt ist.

6. Vorrichtung nach Anspruch 5, dadurch gekennzeichnet, daß der Schwimmkörper (26) mit einem kreisförmigen Schwimmerbehälter (27) umgeben ist, dessen offenes Ende nach oben gerichtet ist und einen nach oben hin ansteigenden inneren Durchmesser sowie eine über der Tropfvorrichtung (9) angeordnete Seitenöffnung (29) und einen Überlauf (28) aufweist, daß der Schwimmerbehälter (27) mit einer Abdeckung (30) versehen ist, die eine zentrale Öffnung für die Spindel (25) und einen in den Schwimmerbehälter (27) passenden und in der äußeren Form der Innenwand des Schwimmerbehälters (27) angepaßten Rand (32) aufweist, der mit dem Schwimmerbehälter (27) eine enge, direkt auf die Seitenöffnung (29) gerichtete Nut (31) aufweist, wobei die Nut (31) im wesentlichen so breit wie die Seitenöffnung (29) ist und daß der Schwimmkörper (26) so dimensioniert ist, daß, wenn der Behälter (27) bis zum Überlauf (28) mit Wasser gefüllt ist, die Spindel (25) ihre maximale, nach oben gerichtete Kraft ausübt.

**Revendications**

1). Procédé de régulation automatique d'une appareil d'irrigation relié à un tuyau d'eau, les différentes étapes de ce procédé consistant en ce qu'une soupape principale (1) munie d'un corps de soupape (4) se présentant sous la forme d'un piston différentiel, est commandée par une soupape de commande (7) de telle manière que le mouvement de la soupape principale (1) entre une position d'ouverture et une position de fermeture, soit commandé par la pression d'eau régnant dans le tuyau, et en ce que la soupape de commande (7) est à son tour commandée par des moyens de renversement (8, 14) basculant dans une première position de façon que la soupape de commande (7) prenne une position fermant la soupape principale (1), et dans une seconde position permettant de libérer la soupape de commande (7) de façon que cette dernière puisse prendre une position ouvrant la soupape principale (1), la position de basculement des moyens de renversement (8, 14) étant déterminée par le niveau d'eau contenu dans une coupelle ouverte (8) constituant un côté des moyens de renversement, cette coupelle étant alimentée en eau, par l'intermédiaire de la soupape de commande (7), avec un débit réglable par des moyens de formation de gouttes (9), tant que la soupape de commande (7) est en position d'ouverture, et de telle manière que les gouttes cessent de tomber quand les moyens de renversement (8, 14) basculent dans une direction donnée sous l'effet de l'augmentation du niveau d'eau dans la coupelle ouverte (8), ce qui permet ainsi de fermer la soupape de commande (7) et de laisser partie par évaporation l'eau provenant de la coupelle ouverte (8), jusqu'à ce que la diminution du niveau d'eau fasse rebasculer les moyens de renversement en arrière pour les ramener dans leur position initiale en ouvrant ainsi la soupape de commande (7), procédé caractérisé en ce qu'un volume d'air dont la pression varie en fonction de la différence de température entre le jour et la nuit, est enfermé dans la chambre à air (15) d'une autre coupelle (14) des moyens de renversement (8, 14), cette pression étant capable de pousser l'eau contenue dans l'autre coupelle (14) pour qu'elle sorte de celle-ci par une fente (17) définie par un espace compris entre une paroi (19) de la chambre à air et le fond (16) des coupelles (8, 14) de manière à passer dans la coupelle ouverte (8) pendant le jour, et pour que cette eau soit aspirée pour repasser par la fente (17) dans la coupelle (14) pendant la nuit.

2). Appareil pour la mise en oeuvre du procédé selon la revendication 1, comprenant une soupape principale (1) munie d'un orifice d'entrée (2) et d'un orifice de sortie (3), et un corps de soupape (4) en forme intérieure de piston différentiel percé d'un trou central (5) allant de son petit côté à son grand côté, un conduit (6) compris entre le grand côté et une soupape de commande (7) montée de manière à fermer et ouvrir la soupape principale (1) lorsqu'elle ferme et ouvre le conduit (6), un dispositif de renversement comportant une coupelle ouverte (8) disposée de manière à être alimentée par un dispositif de formation de gouttes (9) commandé par la soupape de commande (7), la disposition étant telle que dès que la quantité d'eau fournie à la coupelle (8) a atteint une valeur prédéterminée, la coupelle ouverte (8) se renverse en amenant ainsi une projection (10) à agir sur la soupape de commande (7) pour qu'elle forme la soupape principale (1) en coupant ainsi l'aminentation d'eau des moyens de formation de gouttes (9), la projection (10) maintenant alors la soupape de commande (7) fermée jusqu'à ce qu'une quantité d'eau suffisante se soit évaporée de la coupelle ouverte (8) pour lui permettre de rebasculer ein arrière, ce qui permet ainsi à la projection (10) de libérer la soupape de commande (7) pour qu'elle s'ouvre en réouvrant ainsi la soupape principale (1) et en permettant à l'eau de couler une nouvelle fois dans les moyens de formation de gouttes (9), appareil caractérisé en ce que la soupape de commande (7) de la coupelle (8) et la soupape principale (1) sont enfermées dans un boîtier (11) à fond perforé (21), ce boîtier (11) étant muni, au-dessus de la coupelle ouverte (8), d'une dépression (12) munie de perforations (13), et en ce que les moyens de renversement comprennent une autre coupelle (14) faisant corps avec une chambre à air fermée (15), et comportant un fond plat (16) commun avec la coupelle ouverte (8), l'autre coupelle (14) étant reliée à la coupelle ouverte (8) au moyen d'une fente (17) se définissant comme un espace compris entre une parois (19) de la chambre à air (15) et le fond plat (16), la fente (17) étant recouverte par le niveau d'eau dans l'autre coupelle (14), de manière à fermer l'espace d'air dans la chambre à air (15).

3). Appareil selon la revendication 2, caractérisé en ce que la chambre à air (15) est également reliée à la coupelle ouverte (8) par au moins un conduit (18) partant d'une ouverture ménagée dans la paroi (19) de la chambre à air (15), et tourné vers la coupelle ouverte (8) et vers l'extrémité opposée de la coupelle ouverte, ce conduit (18) étant muni d'une fente (20) adjacente au fond de la coupelle et s'étendant sur toute la longueur de celle-ci.

4). Appareil selon l'une quelconque des revendications 2 et 3, caractérisé en ce qu'on bloc à marches d'escalier (23) est monté de manière à se déplacer au-dessous de la chambre à air (15) de façon qu'on puisse choisir l'une quelconque de ses marches d'escalier (24) pour qu'elle serve de moyen de limitation de pivotement des moyens de renversement.

5). Appareil selon la revendication 2, caractérisé en ce que la soupape de commande (7) comporte une tige rectiligne (25) dirigée vers le haut, autour de laquelle se fixe un flotteur (26), la projection (10) étant disposée, lorsqu'elle vient contre l'extrémité supérieure de la tige (25), de manière à maintenir la soupape de commande (7) fermée tant que la coupelle ouverte (8) est remplie d'eau.

6). Appareil selon la revendication 5, caractérisé en ce que le flotteur (26) est entouré par une coupelle circulaire flottante (27), l'extrémité ouverte de cette coupelle étant tournée vers le haut et présentant un diamètre intérieur croissant vers le haut, cette coupelle comportant une ouverture latérale (29) située au-dessus des moyens de formation de gouttes (9), et un trop-plein (28), la coupelle (27) étant recouverte par un couvercle (30) percé d'une ouverture centrale de passage de la tige (25) et muni d'une collerette associée (32) s'adaptant dans la coupelle flottante (27) et définissant avec celle-ci une rainure étroite (31) faisant directement face à l'ouverture latérale (29), cette rainure (31) étant exactement de la même largeur que l'ouverture latérale (29), et le flotteur (26) étant dimensionné de telle façon que lorsque la coupelle (27) est remplie d'eau jusqu'au niveau du trop-plein (28), ce flotteur communique à la tige (25) sa force maximum dirigée vers le haut.

FIG 1

FIG 2

## FIG 3

## FIG 4